# EUROPÄISCHE PATENTSCHRIFT

(11) **EP 2 791 552 B1**
(45) Veröffentlichungstag und Bekanntmachung des Hinweises auf die Patenterteilung: **03.02.2016**
(21) Anmeldenummer: 12769433.9
(22) Anmeldetag: 05.10.2012
(51) Int. Cl.: F16H 57/00, F16H 1/16, B60N 2/16, B60N 2/24

(54) **GETRIEBE, INSBESONDERE FÜR EINEN VERSTELLANTRIEB**
TRANSMISSION, IN PARTICULAR FOR AN ADJUSTMENT DRIVE
MÉCANISME DE TRANSMISSION, EN PARTICULIER POUR UN ENTRAÎNEMENT DE RÉGLAGE

(30) Priorität: 14.12.2011 DE 102011088475
(43) Veröffentlichungstag der Anmeldung: 22.10.2014
(73) Patentinhaber: Robert Bosch GmbH, 70442 Stuttgart (DE)
(72) Erfinder: GENTER, Gerhard, 77855 Achern (DE); BURGER, Anja, Buehl-Eisental 77815 (DE); SCHMIDT, Willi, 76297 Stutensee-Buechig (DE)
(86) Internationale Anmeldenummer: PCT/EP2012/069778
(87) Internationale Veröffentlichungsnummer: WO 2013/087248

(56) Entgegenhaltungen:
- DE-A1- 19 619 955
- DE-U1- 7 638 490
- DE-U1- 29 702 062

## Beschreibung

### Stand der Technik

Die vorliegende Erfindung betrifft ein Getriebe, insbesondere für einen Verstellantrieb, sowie einen Verstellantrieb, insbesondere für einen Kraftfahrzeugsitz, umfassend zumindest ein Getriebe.

Die Druckschrift DE 10 2004 013 543 A1 zeigt einen Verstellantrieb mit einem Getriebe. Das Getriebe umfasst eine Schneckengetriebestufe und eine Exzentergetriebestufe. Insbesondere in solchen selbstbremsenden Bewegungsgetrieben können, vor allem im Senkbetrieb einer Sitzhöhenverstellung, sogenannte "Ratterschwingungen" auftreten. Besonders bei Getrieben für die Sitzhöhenverstellung in einem Kraftfahrzeug führt dies beim Absenken des Sitzes zu einer lästigen Geräuschentwicklung.

Die DE 196 19 955 A1 offenbart ein betriebe, welches unter den Wortlaut des Oberbegriffs des Anspruchs 1 fällt.

### Offenbarung der Erfindung

Das erfindungsgemäße Getriebe mit den Merkmalen des Anspruchs 1 ermöglicht eine Vermeidung von Ratterschwingungen. Insbesondere bei der Verwendung des Getriebes in einem Verstellantrieb für einen Kraftfahrzeugsitz vermeidet das erfindungsgemäße Getriebe Ratterschwingungen und somit Geräuschentwicklung beim Absenken des Sitzes. Diese Vorteile werden erreicht durch ein Getriebe, insbesondere für einen Verstellantrieb, umfassend ein Gehäuse und eine im Gehäuse drehbeweglich gelagerte Schneckenwelle. Die Schneckenwelle ist insbesondere zum Antrieb mit einem Elektromotor angeordnet. Des Weiteren ist im Gehäuse ein mit der Schneckenwelle in Eingriff stehendes Schneckenrad drehbeweglich gelagert. Somit wird die Rotation und das Drehmoment der Schneckenwelle auf dieses Schneckenrad übertragen. Am Schneckenrad oder an einem mit dem Schneckenrad fest verbundenen Element ist eine erste Keilfläche ausgebildet. Diese erste Keilfläche rotiert somit zusammen mit dem Schneckenrad und ist fest mit dem Schneckenrad verbunden. Des Weiteren umfasst das Getriebe ein Bremselement mit einer zweiten Keilfläche. Dieses Bremselement ist gegenüber dem Schneckenrad rotationsfest angeordnet. Insbesondere ist das Bremselement rotationsfest im Gehäuse gelagert. Erfindungsgemäß liegt die erste Keilfläche flächig auf der zweiten Keilfläche auf. Mittels des erfindungsgemäßen Bremselements wird über die beiden Keilflächen sowohl in axialer als auch in radialer Richtung ein hohes Bremsmoment auf das Schneckenrad übertragen. Dadurch wird selbst bei hoher Last am Schneckenrad, also beispielsweise bei Absenken schwerer Fahrzeugsitze, und auch bei hohen Temperaturen, die ungewollte Ratterschwingung verhindert.

Die Unteransprüche zeigen bevorzugte Weiterbildungen der Erfindung.

In bevorzugter Ausführung ist eine Feder vorgesehen, die angeordnet ist, um die beiden Keilflächen aufeinanderzudrücken. Insbesondere stützt sich dabei die Feder mit einem Ende gegen das Gehäuse und mit dem anderen Ende gegen das Bremselement. Die Feder belastet somit das Bremselement in axialer Richtung, also in Richtung der Rotationsachse des Schneckenrades. Bevorzugt werden hier eine Feder oder mehrere Federn am Umfang verteilt angeordnet. Die Feder kann bevorzugt eine Spiralfeder, eine Tellerfeder oder eine Elastomerfeder (O-Ring) sein.

Bevorzugt sind die beiden Keilflächen mit demselben Winkel zur Rotationsachse des Schneckenrades geneigt. Durch eine Ausbildung der beiden Keilflächen mit gleichem Neigungswinkel wird sichergestellt, dass die beiden Keilflächen stets flächig aufeinanderliegen. Die Neigung gegenüber der Rotationsachse des Schneckenrads bewirkt bei Reibung der ersten Keilfläche auf der zweiten Keilfläche ein Bremsmoment in radialer Richtung des Schneckenrades, wobei gleichzeitig eine Kraft in Richtung der Rotationsachse des Schneckenrades übertragen werden kann. In besonders bevorzugter Ausführung ist vorgesehen, dass ein Winkel zwischen der ersten bzw. zweiten Keilfläche und der Rotationsachse des Schneckenrades kleiner 90° und größer 0° ist. Insbesondere liegt dieser Winkel zwischen 85° und 5°, insbesondere zwischen 70° und 20°, insbesondere zwischen 60° und 30°.

Des Weiteren ist es bevorzugt vorgesehen, dass die erste Keilfläche voll umfänglich an einer Innenfläche des Schneckenrades oder einer Innenfläche eines fest mit dem Schneckenrad verbundenen Elementes ausgebildet ist. durch diese Anordnung kann die erste Keilfläche platzsparend im Getriebe angeordnet werden. Unter "Innenfläche" ist eine Fläche zu verstehen, die der Rotationsachse des Schneckenrades zugewandt ist.

Des Weiteren ist bevorzugt vorgesehen, dass das Bremselement als geschlossener Ring ausgebildet ist, wobei die zweite Keilfläche voll umfänglich auf dem Ring ausgebildet ist. Ebenso ist auch die erste Keilfläche bevorzugt voll umfänglich ausgebildet. Die beiden Keilflächen sind insbesondere koaxial mit der Rotationsachse des Schneckenrades angeordnet.

Darüber hinaus ist bevorzugt zumindest ein in das Gehäuse eingreifender Fortsatz am Bremselement und/oder eine Ausnehmung im Bremselement, in die das Gehäuse eingreift, vorgesehen. Durch diese Ausgestaltung wird sichergestellt, dass das Bremselement gegenüber dem Gehäuse nicht rotiert.

Ferner umfasst das Getriebe bevorzugt eine selbsthemmende Getriebestufe. Diese selbsthemmende Getriebestufe ist insbesondere abtriebsseitig des Schneckenrades angeordnet. Somit überträgt das Schneckenrad eine Rotation und ein Drehmoment auf diese selbsthemmende Getriebestufe. Bevorzugt ist diese Getriebestufe als Exzentergetriebestufe, Planetengetriebestufe oder Schraubengetriebestufe ausgebildet.

Die Erfindung umfasst des Weiteren einen Verstellantrieb, insbesondere für einen Kraftfahrzeugsitz, umfassend zumindest eines der soeben beschriebenen Getriebe und einen Elektromotor, insbesondere einen permanent angeregten Gleichstrommotor, zum Antrieb der Schneckenwelle. Besonders bevorzugt ist die oben beschriebene Feder so angeordnet, dass sie das Bremselement mit der zweiten Keilfläche in Richtung des Abtriebes, insbesondere in Richtung der selbsthemmenden Getriebestufe, drückt. Der erfindungsgemäße Verstellantrieb wird insbesondere zur Sitzhöhenverstellung eines Kraftfahrzeugsitzes genutzt. Die im Rahmen des erfindungsgemäßen Getriebes beschriebenen vorteilhaften Ausgestaltungen finden entsprechende vorteilhafte Anwendung auf den erfindungsgemäßen Verstellantrieb.

### Zeichnung

Nachfolgend wird ein Ausführungsbeispiel der Erfindung unter Bezugnahme auf die begleitende Zeichnung im Detail beschrieben. Dabei zeigt:
- Figur 1: eine erste Schnittansicht des erfindungsgemäßen Getriebes gemäß einem Ausführungsbeispiel, und
- Figur 2: eine zweite Schnittansicht des erfindungsgemäßen Getriebes gemäß dem Ausführungsbeispiel.

### Ausführungsform der Erfindung

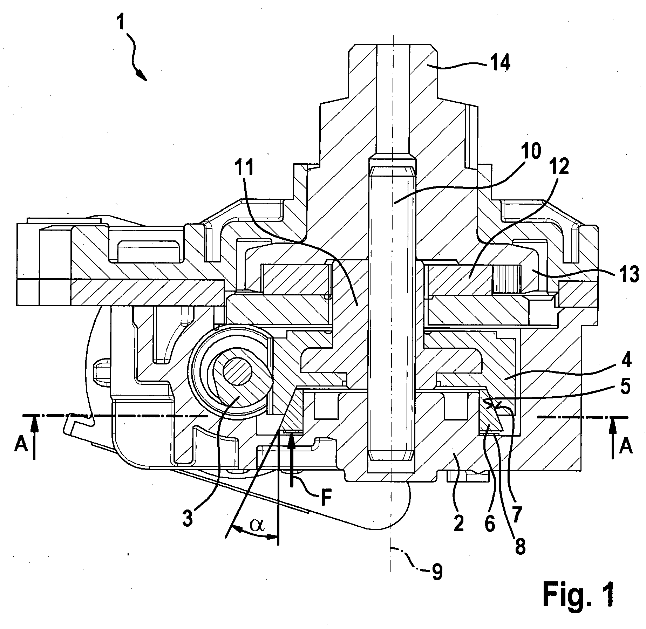

Figur 1 zeigt ein Getriebe 1 für einen Verstellantrieb, insbesondere für einen Kraftfahrzeugsitz. Das Getriebe 1 umfasst ein Gehäuse 2, eine in dem Gehäuse 2 drehbeweglich gelagerte Schneckenwelle 3 und ein in dem Gehäuse 2drehbeweglich gelagertes Schneckenrad 4. Das Schneckenrad 4 steht mit der Schneckenwelle 3 im Eingriff. An einer Innenfläche des Schneckenrades 4 ist eine erste Keilfläche 5 voll umfänglich am Schneckenrad 4 ausgebildet. Die erste Keilfläche 5 ist koaxial zu einer Rotationsachse 9 des Schneckenrades 4 angeordnet.

Des Weiteren befindet sich in dem Gehäuse 2 ein Bremselement 6. Dieses Bremselement 6 ist rotationsfest im Gehäuse 2 aufgenommen. Das Bremselement 6 ist als geschlossener Ring ausgebildet. An dem Bremselement 6 ist eine zweite Keilfläche 7 ausgebildet. Die zweite Keilfläche 7 ist voll umfänglich um das gesamte Bremselement 6 angeordnet. Die zweite Keilfläche 7 ist koaxial zur Rotationsachse 9 des Schneckenrades 4 ausgerichtet. Des Weiteren ist das Bremselement 6 in Richtung der Rotationsachse 9 linear beweglich. Zwischen dem Bremselement 6 und dem Gehäuse 2 ist zumindest eine Feder 8 angeordnet. Diese Feder 8 wird auch als Axialfeder bezeichnet. Die Feder 8 rückt das Bremselement 6 in Richtung der Rotationsachse 9 auf die erste Keilfläche 5. Dadurch liegt die erste Keilfläche 5 auf der zweiten Keilfläche 7 auf.

Über dieses Bremselement 6 und die beiden Keilflächen 5, 7 wird sowohl eine in Axialrichtung wirkende Kraft als auch ein in Rotationsrichtung um die Rotationsachse 9 wirkendes Bremsmoment auf das Schneckenrad 4 übertragen. Dadurch werden Ratterschwingungen im Schneckenrad 4 gedämpft.

Die Figur 1 zeigt mit dem Bezugszeichen F die durch die Feder 8 wirkende Kraft auf das Bremselement 6. Des Weiteren ist in Figur 1 ein Winkel α eingezeichnet. Mit diesem Winkel α ist die erste Keilfläche 5 sowie die zweite Keilfläche 7 gegenüber der Rotationsachse 9 geneigt.

Des Weiteren zeigt Figur 1 einen Bolzen 10. Der Bolzen 10 ist fest im Gehäuse 2 montiert. Auf diesem Bolzen 10 ist ein Exzenterelement 11 sowie ein Abtriebselement 14 drehbar gelagert. Das Exzenterelement 11 ist mit dem Schneckenrad 4 drehfest verbunden. Auf dem Exzenterelement 11 ist ein Exzenterrad 12 drehbeweglich gelagert. Dieses Exzenterrad 12 ist als stirnverzahntes Zahnrad ausgebildet. Das Abtriebselement 14 umfasst ein verzahntes Hohlrad 13. Das Hohlrad 13 steht im Eingriff mit dem Exzenterrad 12.

Über das Exzenterelement 11, das Exzenterrad 12, das Hohlrad 13 und das Abtriebselement 14 wird die rotatiorische Bewegung sowie das Rotationsmoment auf den einzustellenden Kraftfahrzeugsitz übertragen.

Alternativ zur Anbringung der ersten Keilfläche 5 am Schneckenrad 4 kann beispielsweise die erste Keilfläche 5 auch am Exzenterelement 11 ausgebildet werden.

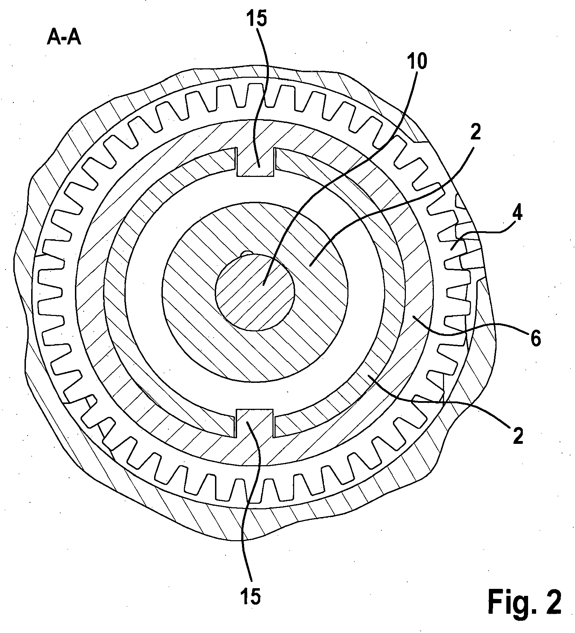

Figur 2 zeigt einen weiteren Schnitt durch das Getriebe 1 gemäß dem Ausführungsbeispiel. Geschnitten ist entlang der Linie A-A (s. Figur 1). Wie in Figur 2 zu sehen ist, umfasst das Bremselement 6 zwei nach innen ragende Fortsätze 15. Diese beiden Fortsätze 15 greifen in entsprechende Nuten im Gehäuse 2. Mittels dieser Fortsätze 15 ist das Bremselement 6 rotationsfest und linear beweglich im Gehäuse 2 aufgenommen.

Ausgehend von der Federkraft F der Feder 8 wird über den Winkel α der Verstärkungsfaktor für das Reibmoment an den Keilflächen 5,7 festgelegt. Somit können also bei relativ geringen Federkräften hohe Reibmomente zur Vermeidung von Ratterschwingungen erzielt werden.

## Patentansprüche

1. Getriebe (1), insbesondere für einen Verstellantrieb, umfassend
- ein Gehäuse (2),
- eine im Gehäuse (2) drehbeweglich gelagerte, antreibbare Schneckenwelle (3),
- ein im Gehäuse (2) drehbeweglich gelagertes, mit der Schneckenwelle (3) in Eingriff stehendes Schneckenrad (4), **gekennzeichnet durch**
- eine umlaufende, am Schneckenrad (4) ausgebildete oder fest mit dem Schneckenrad (4) verbundene erste Keilfläche (5), und
- ein gegenüber dem Schneckenrad (4) rotationsfest angeordnetes Bremselement (6) mit einer zweiten Keilfläche (7),
- wobei die erste Keilfläche (5) flächig auf der zweiten Keilfläche (7) aufliegt.

2. Getriebe nach Anspruch 1, **gekennzeichnet durch** zumindest eine Feder (8), die angeordnet ist, um die beiden Keilflächen (5, 7) aufeinander zu drücken.

3. Getriebe nach Anspruch 2, **dadurch gekennzeichnet, dass** die zumindest eine Feder (8) sich mit einem Ende gegen das Gehäuse (2) und mit dem anderen Ende gegen das Bremselement (6) stützt, um die zweite Keilfläche (7) gegen die erste Keilfläche (5) zu drücken.

4. Getriebe nach einem der vorhergehenden Ansprüche, **dadurch gekennzeichnet, dass** die beiden Keilflächen (5, 7) mit demselben Winkel (α) zur Rotationsachse (9) des Schneckenrades (4) geneigt sind.

5. Getriebe nach einem der vorhergehenden Ansprüche, **dadurch gekennzeichnet, dass** ein Winkel (α) zwischen der ersten bzw. zweiten Keilfläche (5, 7) und der Rotationsachse (9) des Schneckenrades (4) kleiner 90° und größer 0° ist, insbesondere zwischen 85° und 5°, insbesondere zwischen 70° und 20°, insbesondere zwischen 60° und 30°, liegt,

6. Getriebe nach einem der vorhergehenden Ansprüche, **dadurch gekennzeichnet, dass** die erste Keilfläche (5) vollumfänglich an einer Innenflache des Schneckenrades (4) oder einer Innenfläche eines fest mit dem Schneckenrad (4) verbundenen Elementes ausgebildet ist.

7. Getriebe nach einem der vorhergehenden Ansprüche, **dadurch gekennzeichnet, dass** das Bremselement (6) als geschlossener Ring ausgebildet ist, wobei die zweite Keilfläche (7) vollumfänglich auf dem Ring ausgebildet ist.

8. Getriebe nach einem der vorhergehenden Ansprüche, **gekennzeichnet durch** einen in das Gehäuse (2) eingreifenden Fortsatz (15) am Bremselement (6) und/oder eine Ausnehmung im Bremselement (6), in die das Gehäuse (2) eingreift, um eine Rotation des Bremselementes (6) zu verhindern.

9. Getriebe nach einem der vorhergehenden Ansprüche, **gekennzeichnet durch** eine selbsthemmende Getriebestufe (11, 12, 13), insbesondere eine Exzentergetriebestufe, Planetengetriebestufe oder Schraubengetriebestufe, abtriebsseitig des Schneckenrades (4).

10. Verstellantrieb, insbesondere für einen Kraftfahrzeugsitz, umfassend zumindest ein Getriebe (1) nach einem der vorhergehenden Ansprüche und einen Elektromotor zum Antrieb der Schneckenwelle (3).

## Claims

1. Gear mechanism (1), in particular for an adjustment drive, comprising
- a housing (2),
- a driveable worm shaft (3) which is rotatably mounted in the housing (2),
- a worm gear (4) which is rotatably mounted in the housing (2) and which meshes with the worm shaft (3), **characterized by**
- an encircling first wedge surface (5) which is formed on the worm gear (4) or fixedly connected to the worm gear (4), and
- a brake element (6) which is arranged so as to be rotationally fixed with respect to the worm gear (4) and which has a second wedge surface (7),
- wherein the first wedge surface (5) lies areally against the second wedge surface (7).

2. Gear mechanism according to Claim 1, **characterized by** at least one spring (8) which is arranged so as to press the two wedge surfaces (5, 7) toward one another.

3. Gear mechanism according to Claim 2, **characterized in that** the at least one spring (8) is supported with one end against the housing (2) and with the other end against the brake element (6) in order to press the second wedge surface (7) against the first wedge surface (5).

4. Gear mechanism according to one of the preceding claims, **characterized in that** the two wedge surfaces (5, 7) are inclined by the same angle (α) with respect to the axis of rotation (9) of the worm gear (4).

5. Gear mechanism according to one of the preceding claims, **characterized in that** an angle (α) between the first and second wedge surfaces (5, 7) and the axis of rotation (9) of the worm gear (4) is less than 90° and greater than 0°, and lies in particular between 85° and 5°, in particular between 70° and 20°, in particular between 60° and 30°.

6. Gear mechanism according to one of the preceding claims, **characterized in that** the first wedge surface (5) is formed over the full circumference on an inner surface of the worm gear (4) or on an inner surface of an element that is fixedly connected to the worm gear (4).

7. Gear mechanism according to one of the preceding claims, **characterized in that** the brake element (6) is in the form of a closed ring, wherein the second wedge surface (7) is formed over the full circumference on the ring.

8. Gear mechanism according to one of the preceding claims, **characterized by** a projection (15), which engages into the housing (2), on the brake element (6) and/or or by a recess, into which the housing (2) engages, in the brake element (6) for the purpose of preventing a rotation of the brake element (6).

9. Gear mechanism according to one of the preceding claims, **characterized by** a self-locking gear mechanism stage (11, 12, 13), in particular an eccentric mechanism stage, planetary gear mechanism stage or screw mechanism stage, at the drive output side of the worm gear (4).

10. Adjustment drive, in particular for a motor vehicle seat, comprising at least one gear mechanism (1) according to one of the preceding claims and an electric motor for driving the worm shaft (3).

## Revendications

1. Mécanisme de transmission (1) en particulier pour un entraînement de réglage, comprenant
- un boîtier (2),
- un arbre de vis sans fin (3) pouvant être entraîné et supporté à rotation dans le boîtier (2),
- une roue à denture hélicoïdale (4) supportée à rotation dans le boîtier (2), en prise avec l'arbre de vis sans fin (3), **caractérisé par**
- une première surface de clavette (5) périphérique, réalisée sur la roue à denture hélicoïdale (4) ou connectée fixement à la roue à denture hélicoïdale (4), et
- un élément de frein (6) disposé de manière solidaire en rotation par rapport à la roue à denture hélicoïdale (4), comprenant une deuxième surface de clavette (7),
- la première surface de clavette (5) s'appliquant à plat sur la deuxième surface de clavette (7).

2. Mécanisme de transmission selon la revendication 1, **caractérisé par** au moins un ressort (8) qui est disposé de manière à presser l'une contre l'autre les deux surfaces de clavette (5, 7).

3. Mécanisme de transmission selon la revendication 2, **caractérisé en ce que** l'au moins un ressort (8) s'appuie par une extrémité contre le boîtier (2) et par l'autre extrémité contre l'élément de frein (6) afin de presser la deuxième surface de clavette (7) contre la première surface de clavette (5).

4. Mécanisme de transmission selon l'une quelconque des revendications précédentes, **caractérisé en ce que** les deux surfaces de clavette (5, 7) sont inclinées du même angle (α) par rapport à l'axe de rotation (9) de la roue à denture hélicoïdale (4).

5. Mécanisme de transmission selon l'une quelconque des revendications précédentes, **caractérisé en ce qu'**un angle (α) entre la première ou la deuxième surface de clavette (5, 7) et l'axe de rotation (9) de la roue à denture hélicoïdale (4) est inférieur à 90° et supérieur à 0°, en particulier est compris entre 85° et 5°, en particulier est compris entre 70° et 20°, en particulier est compris entre 60° et 30°.

6. Mécanisme de transmission, selon l'une quelconque des revendications précédentes, **caractérisé en ce que** la première surface de clavette (5) est réalisée sur toute la périphérie sur une surface intérieure de la roue à denture hélicoïdale (4) ou sur une surface intérieure d'un élément connecté fixement à la roue à denture hélicoïdale (4).

7. Mécanisme de transmission selon l'une quelconque des revendications précédentes, **caractérisé en ce que** l'élément de frein (6) est réalisé sous forme de bague fermée, la deuxième surface de clavette (7) étant réalisée sur la bague sur toute la périphérie.

8. Mécanisme de transmission selon l'une quelconque des revendications précédentes, **caractérisé par** une saillie (15) sur l'élément de frein (6) s'engageant dans le boîtier (2) et/ou par un évidement dans l'élément de frein (6) dans lequel s'engage le boîtier (2), afin d'empêcher une rotation de l'élément de frein (6).

9. Mécanisme de transmission selon l'une quelconque des revendications précédentes, **caractérisé par** un étage d'engrenage autobloquant (11, 12, 13), en particulier un étage d'engrenage excentrique, un étage d'engrenage planétaire ou un étage d'engrenage hélicoïdal, du côté de la sortie de la roue à denture hélicoïdale (4).

10. Entraînement de réglage, en particulier pour un siège de véhicule automobile, comprenant au moins un mécanisme de transmission (1) selon l'une quelconque des revendications précédentes et un moteur électrique pour l'entraînement de l'arbre de vis sans fin (3).
